Europäisches Patentamt

European Patent Office

Office européen des brevets

(11) Veröffentlichungsnummer: **0 416 451 A2**

## (12) EUROPÄISCHE PATENTANMELDUNG

(21) Anmeldenummer: 90116536.5

(22) Anmeldetag: 29.08.90

(51) Int. Cl.⁵: **F16L 47/02, B29C 65/34, C08J 5/12**

(30) Priorität: 04.09.89 DE 3929326

(43) Veröffentlichungstag der Anmeldung:
**13.03.91 Patentblatt 91/11**

(84) Benannte Vertragsstaaten:
**AT BE CH DE DK ES FR GB GR IT LI LU NL SE**

(71) Anmelder: **WIRSBO PEX G.m.b.H.**
**Ernst-Leitz-Strasse 18**
**W-6056 Heusenstamm(DE)**

(72) Erfinder: **Imgram, Friedrich**
**Ernst-Leitz-Strasse 18**
**W-6056 Heusenstamm(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) Rohrverbindung.

(57) Die Rohrverbindung enthält einen Rohrverbinder (1) mit einer elektrischen Heizwicklung (2), die in den Rohrverbinder (1) im Bereich seiner Innenwand eingebettet ist. Innerhalb des Rohrverbinders (1) befinden sich aneinanderstoßende Rohre (3, 6). Der Rohrverbinder (1) besteht aus einem schmelzbaren und vernetzbaren ersten Kunststoff, und die Rohre (3, 6) bestehen aus einem mindestens erweichbaren und vernetzbaren zweiten Kunststoff. Auf wenigstens eine der Kontaktflächen wird ein Vernetzungsmittel aufgetragen. Durch Erwärmung des Rohrverbinders (1) wird der erste Kunststoff geschmolzen und verbindet sich mit den Rohrenden (4, 5) aus dem zweiten Kunststoff; gleichzeitig findet im Verbindungsbereich (7) Vernetzung statt.

Fig.1

## TECHNISCHES GEBIET

Die Erfindung betrifft eine Rohrverbindung, enthaltend einen Rohrverbinder aus einem schmelzbaren und vernetzbaren ersten Kunststoff mit einer eingebetteten elektrischen Heizwicklung nahe seiner inneren Kontaktfläche und durch den Rohrverbinder verbundene Rohrenden von Rohren aus einem mindestens erweichbaren und vernetzbaren zweiten Kunststoff.

Die Erfindung betrifft auch ein Verfahren zur Herstellung einer Rohrverbindung, bei dem in einen Rohrverbinder aus einem schmelzbaren und vernetzbaren ersten Kunststoff Rohrenden von Rohren aus einem mindestens erweichbaren und vernetzbaren zweiten Kunststoff eingesetzt werden, der Rohrverbinder und die Rohrenden im Kontaktbereich erwärmt werden, wobei der geschmolzene erste Kunststoff und der mindestens erweichte zweite Kunststoff im Kontaktbereich einander durchdringen, und nach Abkühlung ein Verbindungsbereich zwischen dem Rohrverbinder und den Rohrenden gebildet wird.

## ZUGRUNDELIEGENDER STAND DER TECHNIK

Aus der nicht vorveröffentlichten EP-A-0 333 379 sind Rohrverbinder aus schmelzbarem, nicht vernetzten Poly olefin zur Herstellung von Verbindungen von Rohren aus vernetzten Polyolefinen bekannt. In den Rohrverbinder ist dazu im Kontaktbereich zu den zu verbindenden Rohrenden, die in den Rohrverbinder eingesetzt sind, eine elektrische Heizwicklung eingebettet, die an eine Stromquelle anschließbar ist. Bei elektrischer Beheizung werden der Rohrverbinder und die darin eingesetzten Rohrenden so weit erwärmt, daß das Polyolefin des Rohrverbinders aufgeschmolzen und das vernetzte Polyolefin der eingesetzten Rohrenden erweicht werden und einander durchdringen, so daß nach dem Ende der Beheizung und Abkühlung eine feste Verbindung zwischen dem Rohrverbinder und den eingesetzten Rohrenden erhalten wird. In einer speziellen Anwendung wird zur Verbindung der Enden von Kabelumkleidungen aus vernetztem Polyethylen vorgeschlagen, den Rohrverbinder aus nicht vernetztem Polyethylen herzustellen, das ein Peroxid-Vernetzungsmittel enthält. Bei der Erwärmung zur Herstellung der Verbindung zwischen den Enden der Kabelumkleidungen und dem Rohrverbinder wird dann eine Vernetzung des gesamten Rohrverbinders bewirkt.

## OFFENBARUNG DER ERFINDUNG

Die Aufgabe der vorliegenden Erfindung besteht darin, eine besonders feste und sichere Verbindung zwischen den Rohrenden der Rohre und dem Rohrverbinder herzustellen.

Hinsichtlich der erfindungsgemäßen Rohrverbindung wird diese Aufgabe dadurch gelöst, daß zwischen dem Rohrverbinder und den Rohrenden ein Verbindungsbereich gebildet ist, in dem sich der erste und der zweite Kunststoff gegenseitig durchdringen und der erste und der zweite Kunststoff vernetzt sind.

Hinsichtlich des erfindungsgemäßen Verfahrens wird diese Aufgabe dadurch gelöst, daß der Kontaktbereich zwischen dem Rohrverbinder und den Rohr enden mit einem Vernetzungsmittel versehen wird und daß unter der Wärmeeinwirkung der erste und der zweite Kunststoff im Verbindungsbereich vernetzt werden.

Die Erfindung beruht auf der Erkenntnis, daß die geforderte sichere und feste Verbindung dadurch erhalten wird, daß bei der Erwärmung im Durchdringungsbereich, d.h. im wesentlichen oder ausschließlich im Verbindungsbereich zwischen dem Rohrverbinder und den Rohrenden eine Vernetzung erfolgt, und daß es nicht darauf ankommt, daß der Rohrverbinder als ganzes der Vernetzung unterworfen wird. Die Vernetzung im Verbindungsbereich erfolgt nicht nur zwischen den Molekülen des ersten Kunststoffs und den Molekülen des zweiten Kunststoffs, sondern auch zwischen den Molekülen des ersten und zweiten Kunststoffs, so daß deren Moleküle sich im Verbindungsbereich nicht nur gegenseitig durchdringen, sondern auch molekular, d.h. chemisch miteinander verbinden, wodurch eine besonders feste und sichere Verbindung zwischen dem Rohrverbinder und den Rohrenden gebildet wird. Zusätzlich ergibt sich dadurch noch der verfahrenstechnische Vorteil, daß das Vernetzungsmittel nicht in den Rohrverbinder eingearbeitet werden muß, sondern nur von außen auf die Kontaktfläche mindestens eines der zu verbindenden Elemente aufgetragen zu werden braucht, was unmittelbar vor der Herstellung der Verbindung in denkbar einfachster Weise geschehen kann.

Vorteilhafte Weiterbildungen der erfindungsgemäßen Rohrverbindung sind in Unteransprüchen gekennzeichnet.

## KURZE BESCHREIBUNG DER ZEICHNUNGEN

Ausführungsbeispiele der Erfindung sind in den Abbildungen dargestellt und werden nachfolgend anhand der Bezugszeichen im einzelnen erläutert und beschrieben. Es zeigen

Figur 1 eine Längsschnittdarstellung eines ersten Ausführungsbeispiels der erfindungsgemäßen Rohrverbindung;

Figur 2 eine Längsschnittdarstellung eines zweiten Ausführungsbeispiels der erfindungsgemäßen Rohrverbindung; und

Figur 3 eine Längsschnittdarstellung eines Teils der hergestellten Rohrverbindung.

## BEVORZUGTE AUSFÜHRUNGEN DER ERFINDUNG

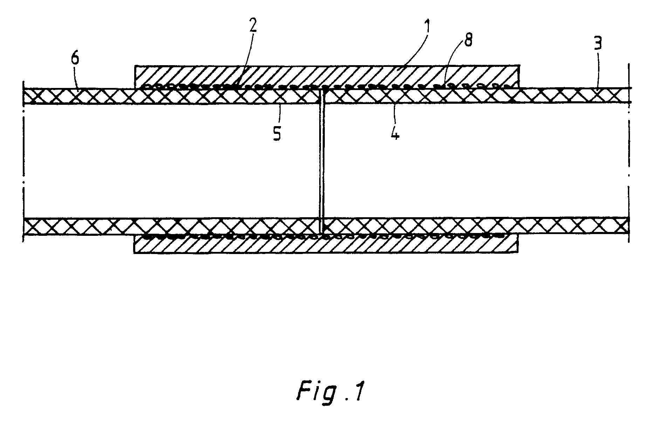

In dem in Figur 1 im Längsschnitt dargestellten Ausführungsbeisbiel erkennt man einen Rohrverbinder 1, der nach Art eines geraden Rohrstücks ausgebildet ist. Dieser Rohrverbinder 1 enthält über einen größeren Teil seiner Länge eine nur schematisch dargestellte elektrische Heizwicklung 2, die innenseitig in den Rohrverbinder 1 eingebettet ist und sich in geringem Abstand von der Innenwand des Rohrverbinders 1 befindet. Der Rohrverbinder 1 besteht aus einem schmelzbaren und vernetzbaren ersten Kunststoff, in dem dargestellten Ausführungsbeispiel aus einem Polyolefin wie Polyethylen.

In den Rohrverbinder 1 sind von entgegengesetzten Enden zwei Rohre 3 und 6 in der Weise eingeführt, daß ihre Rohrenden 4 und 5 unmittelbar aneinander stoßen oder in einem geringen Abstand voneinander angeordnet sind. Die Rohre 3 und 6 bestehen aus einem schmelzbaren, mindestens aber erweichbaren und vernetzbaren Kunststoff, in dem dargestellten Ausführungsbeispiel einem vernetzten Polyolefin wie Polyethylen.

Unmittelbar vor dem Zusammenfügen der Rohrenden 4 und 5 mit dem Rohrverbinder 1 wird entweder auf die Kontaktfläche 8 des Rohrverbinders 1 oder die Außenfläche der Rohrenden 4 und 5 oder beide ein Vernetzungsmittel aufgetragen, beispielsweise in Lösung oder Suspension oder als Paste, in dem dargestellten Ausführungsbeispiel ein Peroxid-Vernetzungsmittel.

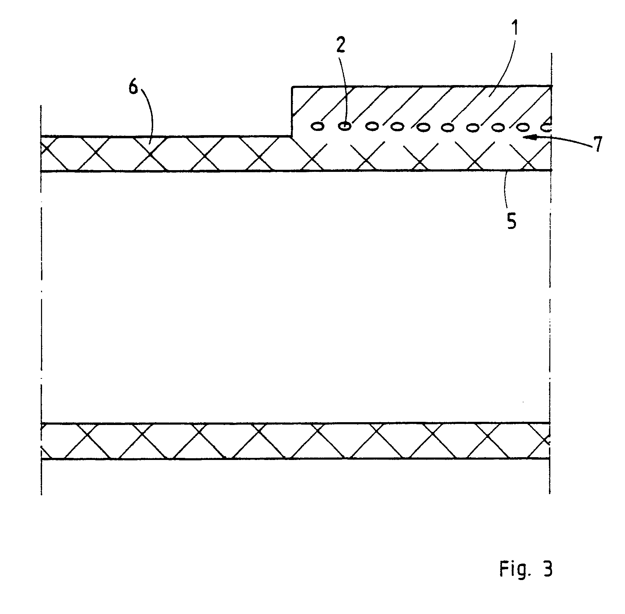

Zur Herstellung der Rohrverbindung wird die elektrische Heizwicklung 2 des Rohrverbinders 1 an eine Stromquelle angeschlossen. Der Rohrverbinder 1 schmilzt durch die Erwärmung im Kontaktbereich. Gleichzeitig erweicht auch das hochvernetzte Polyethylen der Rohrenden $ und 5, so daß sich die beiden Materialien gegenseitig durchdringen. Dabei wird das Vernetzungsmittel unter Bildung von Radikalen zersetzt, die im Durchdringungsbereich eine Vernetzung der beiden Kunststoffe untereinander und miteinander bewirken. Es entsteht so ein in Figur 3 dargestellter Verbindungsbereich 7; die Vernetzung tritt im wesentlichen oder ausschließlich in diesem Verbindungsbereich 7 ein. Dadurch, daß sich die beiden Kunststoffe im Verbindungsbereich nicht nur gegenseitig durchdringen, sondern auch chemisch miteinander verbinden, wird eine sichere, das heißt feste und dichte Verbindung zwischen dem Rohrverbinder 1 und den Rohrenden $ und 5, aber auch zwischen den Rohrenden 4 und 5 hergestellt.

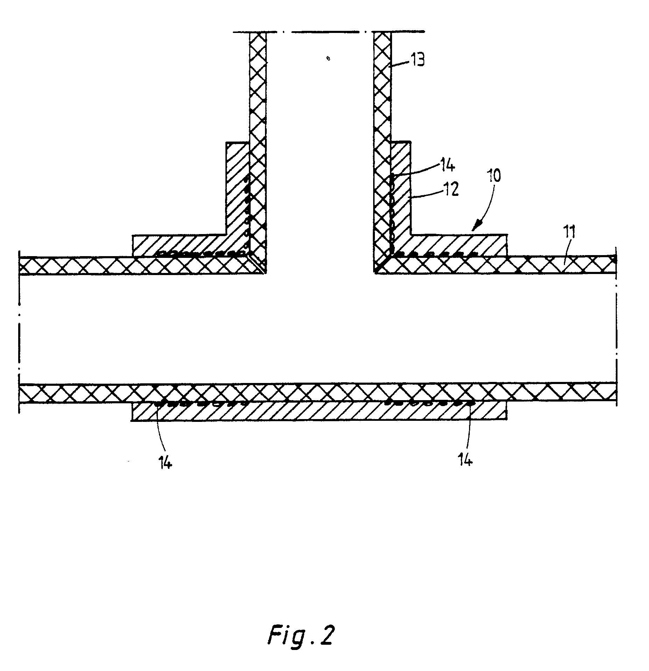

In dem Ausführungsbeispiel von Figur 2 wird die Herstellung von einer Anschlußverbindung in Form eines T-Stücks gezeigt. Hierzu wird ein Rohrverbinder 10 in Form eines T-Stücks verwendet. Dieser Rohrverbinder 10 wird auf ein durchgehendes Rohr 11 aufgeschoben, in das im Bereich der Anschlußstelle ein Loch geschnitten ist. In den Stamm 12 des T-förmigen Rohrverbinders 10 wird ein Abzweigrohr 13 eingeführt. Dieses Abzweigrohr 13 wird auf Stoß an die Schnittstelle im durchgehenden Rohr 11 eingesetzt.

Der T-förmige Rohrverbinder 10 ist im Bereich der Anschlußstelle mit einer elektrischen Heizwicklung 14 versehen.

Zur Herstellung der sicheren Verbindung zwischen dem Abzweigrohr 13 und dem durchgehenden Rohr 11 wird wie vorher ein Vernetzungsmittel aufgetragen und bei Erwärmung durch die Heizwicklung 14 die vorstehend beschriebene, im wesentlichen oder ausschließlich im Verbindungsbereich vernetzte Verbindung hergestellt.

In dem dargestellten Ausführungsbeispiel wird die Erwärmung durch die nahe der Kontaktfläche in den Rohrverbinder 1 oder 10 eingebettete Heizwicklung 2 bzw. 14 bewirkt. An deren Stelle können auch andere Heizmittel verwendet werden, die eine Erwärmung überwiegend im Kontaktbereich gestatten.

Es sind viele weitere Variationen und Ausgestaltungen des Rohrverbinders außer den hier dargestellten Rohrverbindern 1 und 10 möglich, so daß mögliche Rohrverbindungen in großer Variationsbreite in der vorstehend beschriebenen Weise hergestellt werden können.

Bei einer vorteilhaften Ausführung der Rohrverbindung ist das oder jedes Rohr zur weiteren Verstärkung der Verbindung im Bereich des Rohrverbinders mit einer ver größerten, strukturierten oder profilierten Oberfläche versehen, beispielsweise dadurch, daß die Außenfläche des Rohres aufgerauht oder gewellt ausgebildet ist oder mit Rillen versehen ist.

## Ansprüche

1. Rohrverbindung, enthaltend einen Rohrverbinder (1, 10) aus einem schmelzbaren und vernetzbaren ersten Kunststoff mit einer eingebetteten elektrischen Heizwicklung (2, 14) nahe seiner inneren Kontaktfläche (8) und durch den Rohrverbinder (1, 10) verbundene Rohrenden (4, 5) von Rohren (3, 6; 11, 13) aus einem mindestens erweichbaren und vernetzbaren zweiten Kunststoff,
dadurch gekennzeichnet, daß zwischen dem Rohrverbinder (1, 10) und den Rohrenden (4, 5) ein Verbindungsbereich (7) gebildet ist, in dem sich der erste und der zweite Kunststoff gegenseitig durchdringen und der erste und der zweite Kunststoff vernetzt sind.

2. Rohrverbindung nach Anspruch 1, dadurch gekennzeichnet, daß der Rohrverbinder (10) T-förmig ausgebildet ist und ein Abzweigrohr (13) aus dem zweiten Kunststoff mit einem Durchgangsrohr (11) aus dem zweiten Kunststoff verbindet und daß der Rohrverbinder (10) im Verbindungsbereich (7) des Abzweigrohres (13) mit der elektrischen Heizwicklung (14) versehen ist.

3. Rohrverbindung nach einem der Ansprüche 1 oder 2, dadurch gekennzeichnet, daß die Rohrenden (4, 5) der Rohre (3, 6; 11, 13) aus dem zweiten Kunststoff mit einer vergrößerten Oberfläche versehen sind.

4. Rohrverbindung nach Anspruch 3, dadurch gekennzeichnet, daß die vergrößerte Oberfläche eine aufgerauhte Oberfläche bildet.

5. Rohrverbindung nach Anspruch 3, dadurch gekennzeichnet, daß die vergrößerte Oberfläche mit Rillen versehen ist.

6. Rohrverbindung nach einem der Ansprüche 1 bis 5, dadurch gekennzeichnet, daß der erste Kunststoff aus einem schmelzbaren, nicht vernetzten Polyolefin und der zweite Kunststoff aus einem erweichbaren, vernetzten Polyolefin besteht.

7. Verfahren zur Herstellung einer Rohrverbindung, bei dem in einen Rohrverbinder (1, 10) aus einem schmelzbaren und vernetzbaren ersten Kunststoff Rohrenden (4, 5) von Rohren (3, 6; 11, 13) aus einem mindestens erweichbaren und vernetzbaren zweiten Kunststoff eingesetzt werden, der Rohrverbinder (1, 10) und die Rohrenden (4, 5) im Kontaktbereich erwärmt werden, wobei der geschmolzene erste Kunststoff und der mindestens erweichte zweite Kunststoff im Kontaktbereich einander durchdringen, und nach Abkühlung ein Verbindungsbereich (7) zwischen dem Rohrverbinder (1, 10) und den Rohrenden (4, 5) gebildet wird,
dadurch gekennzeichnet, daß der Kontaktbereich zwischen dem Rohrverbinder (1, 10) und den Rohrenden (4, 5) mit einem Vernetzungsmittel versehen wird und daß unter der Wärmeeinwirkung der erste und der zweite Kunststoff im Verbindungsbereich vernetzt werden.

8. Verfahren nach Anspruch 7, dadurch gekennzeichnet, daß auf eine innenseitige Kontaktfläche (8) des Rohrverbinders (1, 10) vor dem Einsetzen der Rohrenden (4, 5) ein Vernetzungsmittel aufgetragen wird.

9. Verfahren nach Anspruch 7, dadurch gekennzeichnet, daß auf die Rohrenden (4, 5) der Rohre (3, 6; 11, 13) vor dem Einsetzen in den Rohrverbinder (1, 10) ein Vernetzungsmittel aufgetragen wird.

10. Verfahren nach einem der Ansprüche 7 bis 9, dadurch gekennzeichnet, daß die Rohrenden (4, 5) der Rohre (3, 6; 11, 13) strukturiert werden.

11. Verfahren nach Anspruch 10, dadurch gekennzeichnet, daß die Rohrenden (4, 5) der Rohre (3, 6; 11, 13) an ihrer äußeren Oberfläche aufgerauht werden.

12. Verfahren nach Anspruch 10, dadurch gekennzeichnet, daß die Rohrenden (4, 5) der Rohre (3, 6; 11, 13) an ihrer äußeren Oberfläche mit Rillen versehen werden.

13. Verfahren nach einem der Ansprüche 7 bis 12, dadurch gekennzeichnet, daß in den Rohrverbinder (1, 10) innenseitig nahe einer Kontaktfläche (8) zu den eingesetzten Rohrenden (4, 5) eine elektrische Heizwicklung (2, 14) eingebettet wird.

14. Verfahren nach einem der vorstehenden Ansprüche, dadurch gekennzeichnet, daß als erster Kunststoff ein schmelzbares und vernetzbares Polyolefin und als zweiter Kunststoff ein erweichbares, vernetztes Polyolefin ausgewählt wird.

*Fig .1*

Fig.2

Fig. 3